# EUROPÄISCHE PATENTSCHRIFT

(11) **EP 2 254 011 B1**
(45) Veröffentlichungstag und Bekanntmachung des Hinweises auf die Patenterteilung: **01.08.2012**
(21) Anmeldenummer: 09160759.8
(22) Anmeldetag: 20.05.2009
(51) Int. Cl.: G05B 19/042

(54) **Energieeinspeisung bei AS-Interface**
Energy feed-in for AS interface
Alimentation en énergie d'une interface AS

(43) Veröffentlichungstag der Anmeldung: 24.11.2010
(73) Patentinhaber: Siemens Aktiengesellschaft, 80333 München (DE)
(72) Erfinder: Bär, Thomas, 92260, Fichtenhof (DE); Wiesgickl, Bernhard, 92249, Vilseck (DE)

(56) Entgegenhaltungen:
- EP-A2- 1 312 991
- EP-A2- 2 000 866
- DE-U1-202004 003 475
- DE-U1-202004 020 520

## Beschreibung

Die Erfindung betrifft ein Aktor-Sensor-Interface (AS-i) Bussystem umfassend:
- einen Master,
- ein Netzteil,
- einen von dem Netzteil mit Energie versorgbaren Slave, und
- einen AS-i Bus, worüber der Master mit dem Slave verbindbar ist und dazu ausgebildet ist, Energie- und Datensignale für eine Kommunikation zwischen dem Master und dem Slave zu übertragen, sowie einen Master und einen Slave für ein derartiges Aktor-Sensor-Interface Bussystem.

Das AS-i ist ein Standard für die Feldbus-Kommunikation, der zum Anschluss von Aktoren und Sensoren entwickelt worden ist. Ziel ist es, die bisherige Parallelverkabelung zu ersetzen. Das AS-i wird dabei hauptsächlich auf der Sensor-/Aktor-Ebene eingesetzt und ist seit 1999 internationaler Standard nach EN 50295 und IEC 62026-2. Das AS-i ist ein Single-Master-System, d.h. ein Master pollt zyklisch alle projektierten Slaves und tauscht mit ihnen die Ein-/Ausgangsdaten aus. Ein Telegramm besteht dabei aus 4-Bit Nutzdaten. Mit einem seriellen Übertragungsprotokoll kommuniziert der Master mit den Teilnehmern (Slaves). Jedem Slave wird durch ein Adressiergerät oder über den Master eine eindeutige Adresse zugewiesen. Als Übertragungsmedium kommt ein ungeschirmtes zweiadriges Flachbandkabel (AS-i Bus) zum Einsatz, das gleichzeitig der Spannungsversorgung für die Kommunikationselektronik und für die Teilnehmer mit niedrigem Strombedarf, z.B. Lichtschranken, dient. Verbraucher mit einem höheren Energiebedarf, z.B. Ventilinseln, erhalten eine separate Energieversorgungsleitung zur Energieversorgung. Die Energieversorgung erfolgt hierbei über ein herkömmliches Netzteil. Über ein AS-i Netzteil erfolgt die Spannungsversorgung der Kommunikationselektronik der am AS-i Bus angeschlossenen Teilnehmer sowie die Spannungsversorgung der Teilnehmer mit niedrigem Strombedarf. Das AS-i Netzteil ermöglicht durch eine Datenentkopplung die Kommunikation zwischen dem Master und allen projektierten Slaves. Eine Besonderheit des AS-Interface ist somit, dass die Spannungs- bzw. Stromversorgung und die Datenübertragung über dieselben zwei Leitungen, nämlich den AS-i Bus, erfolgt. Zur Stromversorgung der Kommunikationselektronik des Masters und der Slaves dient eine Stromversorgungseinheit, nämlich das AS-i Netzteil.

Die gleichzeitige Spannungsversorgung und Datenübertragung des AS-i Netzteils erfordert eine Datenentkopplung zwischen der Spannungs- bzw. Stromquelle und den restlichen AS-i Teilnehmern. Hierbei ist üblicherweise der Ausgang des AS-i Netzteils über eine Datenentkopplung an den AS-i Bus angeschlossen. Die Datenentkopplung dient dazu, die zur Versorgung des Slaves und des Masters verwendete Gleichspannung von dem auf den AS-i Bus aufmodulierten Sende- und Antwortimpulsen abzukoppeln. Da die Datenentkopplung Bestandteil des AS-Interface Netzgerätes ist, fließt der Gesamtstrom des AS-Interface Netzteils (üblicherweise bis 8 Ampere) über die Datenentkopplung, wodurch diese voluminös und teuer ist. Die Datenentkopplung verhindert somit zum Einen, dass die überlagerte Kommunikation durch das Netzteil kurzgeschlossen wird und zum Anderen sorgt sie dafür, dass die Sendestromimpulse vom Master oder vom Slaves zu Spannungsimpulsen geformt werden, welche der Masterempfänger und alle Slaveempfänger decodieren können. Jedes AS-i Bussystem darf nur eine Datenentkopplung aufweisen, da ansonsten die Spannungsimpulsformung nicht mehr normgerecht erfolgt.

DE 20 2004 003475 U1 offenbart ein AS-i Interface Netz, bei welchem mittels zusätzlicher Gleichstrom-Netzgeräte, welche an der AS-i Interface Leitung angeschlossen sind, Energie in das AS-Interface Netz eingespeist wird, so dass AS-Interface Slaves oder Gruppen von AS-Interface Slaves mit Energie versogt werden können.

Aufgabe ist es, die genannte Vorrichtung weiterzuentwickeln, so dass der Hardwareaufwand des Aktor-Sensor-Interface Bussystems vermindert wird.

Erfindungsgemäß wird diese Aufgabe gelöst, durch ein System gemäß Anspruch 1.

Ferner wird die Aufgabe gelöst durch einen Master nach Anspruch 6 sowie einen Slave nach Anspruch 7. Vorteilhafte Weiterbildungen der Erfindung sind in den jeweiligen abhängigen Ansprüchen definiert.

Der mit der Erfindung erzielte Vorteil besteht darin, dass ein Standard AS-i Netzteil überflüssig wird. Das Umformen der Sendestromimpulse zu Spannungsimpulsen, welche herkömmlich von der Datenentkopplung des AS-i Netzteils übernommen wurde, wird nun durch die Signalformungskomponente übernommen. Die für den AS-i Bus notwendige Energieversorgung erfolgt nun über eine Energieeinspeisekomponente des Slaves. Dies hat den Vorteil, dass insbesondere Slaves, bei denen eine separate Energieversorgung notwendig ist, dahingehend ausgenutzt werden, die Energie in den AS-i Bus einzuspeisen. Die Energieversorgung des AS-i Bussystems erfolgt somit "rückwärts" über den Slave, aus den für dem Slave vorgesehenen Netzteil. An einer beliebigen Stelle des AS-i Busses wird die Signalformungskomponente an den AS-i Bus angeschlossen. Die Signalformungskomponente formt wie die Datenentkopplung die Sendestromimpulse zu Spannungsimpulsen, jedoch fließt über die Signalformungskomponente nun kein Gleichstrom des AS-i Netzteils. Dies hat den Vorteil, dass die Signalformungskomponente sehr kompakt mit Miniaturbauteilen und kostengünstig realisiert werden kann, da sie nicht mehr für einen hohen Strom ausgelegt werden muss.

Sofern das AS-i Bussystem aus mehreren Slaves, welche eine Energieeinspeisekomponente aufweisen, besteht, ist es möglich, aus verschiedenen Netzteilen Energie in das AS-i Bussystem einzuspeisen. Dies hat den Vorteil, dass bei einem Ausfall eines Slaves bzw. einer Energieeinspeisekomponente eine andere Energieeinspeisekomponente eines anderen Slaves das AS-i Bussystem versorgen kann, so dass die Kommunikation und Energieversorgung zwischen dem Master und den Slaves ungestört weiterlaufen kann. Ein bezüglich der Energieversorgung redundantes System wird hierdurch gebildet, was die Zuverlässigkeit sowie die Sicherheit enorm steigert.

Sofern ein AS-i Bussystem aus mehreren Slaves, welche jeweils eine Energieeinspeisekomponente aufweisen, besteht, ist es ferner möglich, dass über viele Energieeinspeisekomponenten die benötigte Energie in das AS-i Bussystem eingespeist wird. Die Versorgung des AS-i Bussystems wird somit auf mehrere Energieeinspeisekomponenten aufgeteilt. Dies hat den Vorteil, dass die Energieeinspeisekomponenten kleiner dimensioniert werden können, so dass auch bei beengten Platzverhältnissen in einem Slave die Energieeinspeisekomponente sehr platzsparend eingebaut werden kann. Zudem wird ebenso ein bezüglich der Energieversorgung redundantes System gebildet, welches die Zuverlässigkeit sowie die Sicherheit enorm steigert.

Durch die dezentrale Einspeisung bzw. durch die dezentralen Einspeisungen kann das AS-i Netzteil eingespart werden, was letztendlich eine Kosteneinsparung für das AS-i Bussystem bewirkt. Anhand der auf den AS-I Bus eingespeisten Energie wird vorzugsweise eine jeweilige Kommunikationseinheit des Masters und der Slaves mit Energie versorgt.

In einer vorteilhaften Ausführungsform der Erfindung umfasst der AS-i Bus eine erste und eine zweite Leitungen und die Signalformungskomponente ist als Zweipol ausgebildet, dessen Anschlüsse eingangsseitig jeweils auf eine Parallelschaltung aus einer Spule und einen ohmschen Widerstand geschalten sind, wobei die beiden Parallelschaltungen über einen Kondensator verbunden sind.

Mit Hilfe des Kondensators werden die Parallelschaltungen hochfrequent zusammengeschlossen. Dies ermöglicht es, dass die Sendestromimpulse vom Master oder dem Slave zu Spannungsimpulsen geformt werden, welche der Masterempfänger und der Slaveempfänger decodieren kann. Der Vorteil der Signalformungskomponente gegenüber der Datenentkopplungskomponente eines herkömmlichen AS-i Netzteils besteht darin, dass die Signalformungskomponente für keine großen Ströme ausgelegt sein muss und somit sehr kompakt mit Miniaturbauteilen und kostengünstig realisiert werden kann.

In einer weiteren Ausführungsform der Erfindung weist der Master die Signalformungskomponente auf.

Dies hat den Vorteil, dass die Signalformungskomponente, welche nur einmal je AS-i Bussystem eingebaut sein darf, in einem Modul des AS-i Bussystems verbaut ist, welche ebenso nur einmal je AS-i Bussystem verbaut ist.

In einer weiteren Ausführungsform der Erfindung weist die Energieeinspeisekomponente eine Induktivität auf, welche dazu ausgebildet ist, die Energie auf den AS-i Bus einzuspeisen.

Hierdurch kann die für den AS-i Bus notwendige Energieversorgung mit Gleichspannung erfolgen. Sind mehrere Slaves in dem AS-i Bussystem verbaut, so kann die Energieversorgung des ASi Busses über mehrere Slaves erfolgen. Durch den redundanten Aufbau kann die Zuverlässigkeit bezüglich der Energieversorgung des Systems verbessert werden. Die Energieeinspeisekomponente besteht vorzugsweise aus zwei Induktivitäten.

In einer weiteren vorteilhaften Ausführungsform der Erfindung ist die Induktivität derart dimensioniert, dass die Energieeinspeisekomponente hochimpedant für die Datensignale ist.

Auf diese Weise wird sichergestellt, dass die Kommunikation, welche auf dem AS-i Bus zwischen dem Master und dem Slave stattfindet, nicht gestört bzw. beeinflusst wird.

In einer weiteren vorteilhaften Ausführungsform der Erfindung umfasst das AS-i Bussystem mehrere Slaves, welche die Energieeinspeisekomponente aufweisen, wobei die Energieeinspeisekomponenten derart ausgebildet sind, dass die für den AS-i Bus notwendige Energie aufgeteilt wird.

Durch das Aufteilen der Energieversorgung auf die einzelnen Energieeinspeisekomponenten, muss die einzelne Energieeinspeisekomponente nicht mehr die Gesamtenergie für den AS-i Bus zur Verfügung stellen. Hierdurch kann eine vereinfachte kleinere Bauform der Energieeinspeisekomponente realisiert werden, was bei beengten Platzverhältnissen in den Slaves von einem großen Vorteil ist. Des Weiteren wird hinsichtlich der Energieversorgung des AS-I Busses bei ausreichender Dimensionierung der einzelnen Energieeinspeisekomponenten ein hinsichtlich der Energieversorgung redundantes AS-i Bussystem geschaffen und somit die Sicherheit und Zuverlässigkeit gesteigert.

Im Folgenden werden die Erfindungen und Ausgestaltungen der Erfindung anhand der in den Figuren dargestellten Ausführungsbeispiele näher beschrieben und erläutert. Es zeigen:
- FIG 1: ein Aktor-Sensor-Interface Bussystem, und
- FIG 2: einen schematischen Aufbau einer Signalformungskom- ponente, welche an einen AS-i Bus angeschlossen ist.

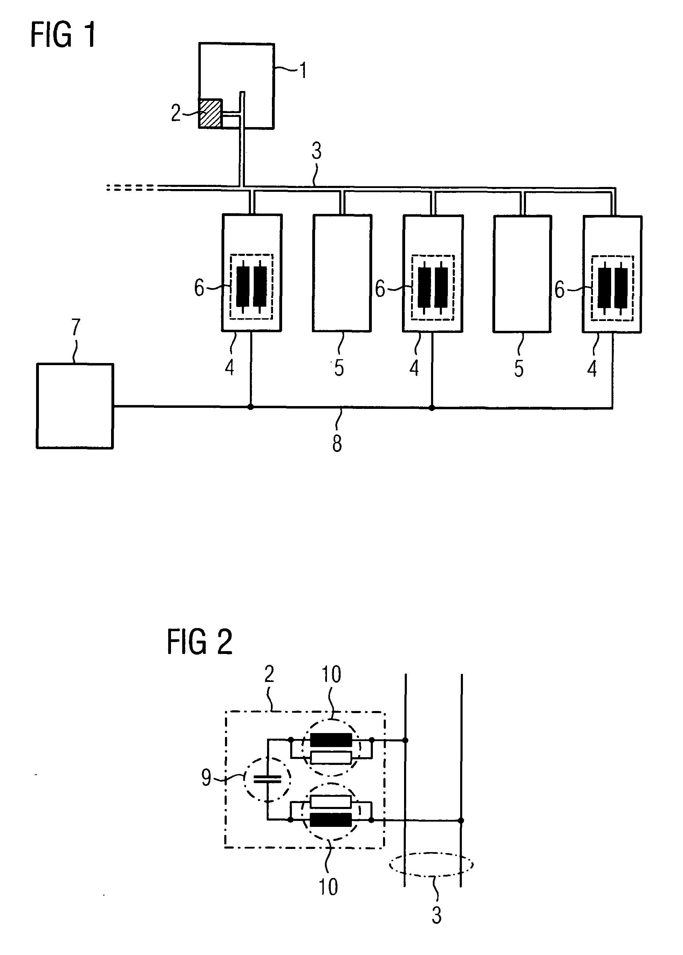

FIG 1 zeigt ein Aktor-Sensor-Interface Bussystem. Hierbei ist ein Master 1 über einen AS-i Bus 3 mit mehreren Slaves 4 sowie mehreren herkömmlichen AS-i Slaves 5 verbunden. Die Slaves 4 unterscheiden sich von den herkömmlichen AS-i Slaves 5 dadurch, dass sie eine Energieeinspeisekomponente 6 aufweisen. Die Slaves 4 werden über eine Energieversorgungsleitung 8 eines Netzteils 7 mit Energie versorgt. Die Energieversorgung der Slaves 4 kann ebenso jeweils über separate Netzteile 7 erfolgen.

Das Aktor-Sensor-Interface (AS-i) Bussystem ist ein Bussystem mit Energie und Daten auf einer ungeschirmten 2-Draht-Leitung. Die Energieeinspeisung erfolgt üblicherweise aus einem AS-i Netzteil mit 24 bis 31 Volt Gleichspannung über eine Datenentkopplung, wobei die Datenentkopplung in dem AS-i Netzteil integriert ist oder als Zusatzkomponente an das AS-i Netzteil angebaut werden kann. Diese Datenentkopplung verhindert zum Einen, dass die überlagerte Kommunikation durch das AS-i Netzteil kurzgeschlossen wird, und zum Anderen werden durch diese Datenentkopplung die Sendestromimpulse zu Spannungsimpulsen geformt. Dieses herkömmliche Verfahren hat den Nachteil, dass der Gesamtstrom aus dem AS-i Netzteil über die Datenentkopplung fließt, wodurch diese voluminös und teuer ist. Des Weiteren ist ein separates AS-i Netzteil für ein ASi Bussystem notwendig.

Wie aus der FIG 1 ersichtlich ist, ist dieses AS-i Netzteil nicht mehr notwendig, da die Signalformungskomponente 2 dafür sorgt, dass die Sendestromimpulse vom Master 2 oder den Slaves 4, 5 zu Spannungsimpulsen geformt werden, welche der Masterempfänger und alle Slaveempfänger decodieren können. Die Signalformungskomponente 2 ist hierbei in dem Master 1 integriert. Dies hat den Vorteil, dass die Signalformungskomponente 2, welche nur einmal je AS-i Bussystem vorkommen darf, in einem Modul verbaut wird, welches ebenso nur einmal je AS-i Bussystem verbaut wird, nämlich in dem Master 1. Die durch das "gestrichene" AS-i Netzteil fehlende Energieversorgung des AS-i Busses erfolgt nun über die Energieeinspeisekomponente 6 der Slaves 4. Die Energieeinspeisekomponente 6 kann beispielsweise durch eine Spule realisiert werden.

Hierbei kann die gesamte Energieversorgung des AS-i Busses 3 von einer einzelnen Energieeinspeisekomponente 6 eines Slaves 4 erfolgen. Liegen mehrere Slaves 4 vor, so kann bei Versagen einer Energieeinspeisekomponente 6 eines Slaves 4 eine andere Energieeinspeisekomponente 6 eines anderen Slaves 4 die Versorgung des AS-i Busses 3 übernehmen.

Alternativ kann die Energieversorgung auf die einzelnen Energieeinspeisekomponenten 6 aufgeteilt werden, so dass eine einzelne Energieeinspeisekomponente 6 nicht die Gesamtenergie für den AS-i Bus 3 zur Verfügung stellt. Hierdurch kann eine vereinfachte kleinere Bauform der Energieeinspeisekomponente 6 realisiert werden, was bei beengten Platzverhältnissen in den Slaves 4 von einem großen Vorteil ist.

Sofern mehr Slaves 4 vorliegen wird bezüglich der Energieversorgung ein redundantes AS-i Bussystem geschaffen und somit die Sicherheit und Zuverlässigkeit gesteigert.

Die Induktivität der Energieeinspeisekomponente 6 ist hierbei derart dimensioniert, dass die Energieeinspeisekomponente 6 hochimpedant für die Datensignale auf dem AS-i Bus 3 ist. Auf diese Weise kann eine Energieversorgung des AS-i Busses 3 erfolgen und ein gleichzeitiges unerwünschtes Stören der Kommunikation auf dem AS-i Bus 3 vermieden werden.

Sofern der AS-i Bus 3 mit mehreren Slaves 4, welche eine Energieeinspeisekomponente 6 aufweisen, verbunden ist, ist es zudem möglich, aus verschiedenen Netzteilen 7, sofern mindestens zwei Slaves zwei separate Netzteile 7 aufweisen, Energie in das AS-i Bussystem einzuspeisen. Bei ausreichender Dimensionierung der Energieeinspeisekomponenten 6 kann nun bei Ausfall eines Netzteils 7 der AS-i Bus 3 dennoch über die Energieeinspeisekomponente bzw. die Energieeinspeisekomponenten, welche mit dem anderen Netzteil 7 verbunden sind, mit Energie versorgt werden, so dass die Kommunikation ungestört weiterlaufen kann. Die Zuverlässigkeit des AS-i Bussystems wird hierdurch enorm gesteigert.

Durch die dezentrale Einspeisung der Energie in den AS-i Bus 3 kann zudem der Leitungsquerschnitt der AS-i Leitung des ASi Busses 3, reduziert werden. Material kann eingespart werden und somit die Kosten reduziert werden.

Die Energieversorgung des AS-i Busses 3 über ein AS-i Netzteil wird somit für den Endanwender überflüssig. Der Platzbedarf, sowie der Verdrahtungsaufwand wird durch die Integration der Signalformungskomponente 2 in den Master 1 und der Energieeinspeisekomponente 6 in den Slave 4 reduziert.

FIG 2 zeigt einen schematischen Aufbau einer Signalformungskomponente 2, welche an einen AS-i Bus 3 angeschlossen ist. Hierbei ist ersichtlich, dass die Signalformungskomponente 2 zwei Anschlüsse hat. An jedem Anschluss ist eingangsseitig eine Parallelschaltung 10 angeschlossen. Die Parallelschaltungen 10 sind über einen Kondensator 9 hochfrequent miteinander verbunden. Die Parallelschaltung 10 besteht aus einer Spule und einen ohmschen Widerstand. Durch eine derartige Anordnung können Sendestromimpulse vom Master 1 oder den Slaves 4 zu Spannungsimpulsen geformt werden, welche der Masterempfänger und alle Slaveempfänger decodieren können. Der Vorteil der separaten Signalformungskomponente 2 besteht darin, dass nicht mehr der Gesamtstrom des AS-i Netzteils über die einzelnen Komponenten fließen muss, wodurch die Signalformungskomponente 2 sehr kompakt mit Miniaturbauteilen und kostengünstig realisiert werden kann. Die Signalformungskomponente 2 kann an einer beliebigen Stelle des AS-i Busses 3 angeschlossen werden.

## Patentansprüche

1. Aktor-Sensor-Interface Bussystem umfassend:
- einen Master (1),
- ein Netzteil (7),
- einen von dem Netzteil (7) mit Energie versorgbaren Slave (4)
- einen AS-i Bus (3), worüber der Master (1) mit dem Slave (4) verbindbar ist und dazu ausgebildet ist, Energie und Datensignale für eine Kommunikation zwischen dem Master (1) und dem Slave (4) zu übertragen,
- eine mit dem AS-i Bus (3) verbundene Signalformungskomponente (2), welche dazu ausgebildet ist Sendestromimpulse zu Spannungsimpulsen zu formen,
**dadurch gekennzeichnet, dass**
der Slave (4) eine Energieeinspeisekomponente (6) aufweist, welche dazu ausgebildet ist, die von dem Netzteil (7) gelieferte Energie auf den AS-i Bus (3) einzuspeisen und der Master (1) die Signalformungskomponente (2) aufweist.

2. Aktor-Sensor-Interface Bussystem nach Anspruch 1, wobei der AS-i Bus (3) eine erste und eine zweite Leitungen umfasst, wobei die Signalformungskomponente (2) als Zweipol ausgebildet ist, dessen Anschlüsse eingangsseitig jeweils auf eine Parallelschaltung (10) aus einer Spule und einen ohmschen Widerstand geschalten sind, wobei die beiden Parallelschaltungen (10) über einen Kondensator (9) verbunden sind.

3. Aktor-Sensor-Interface Bussystem nach einem der vorhergehenden Ansprüche, wobei die Energieeinspeisekomponente (6) eine Induktivität aufweist, welche dazu ausgebildet ist, die Energie auf den AS-i Bus (3) einzuspeisen.

4. Aktor-Sensor-Interface Bussystem nach Anspruch 3, wobei die Induktivität derart dimensioniert ist, dass die Energieeinspeisekomponente (6) hochimpedant für die Datensignale ist.

5. Aktor-Sensor-Interface Bussystem nach einem der vorhergehenden Ansprüche, wobei das Aktor-Sensor-Interface Bussystem mehrere Slaves (4) umfasst, welche die Energieeinspeisekomponente (6) aufweisen, wobei die Energieeinspeisekomponenten (6) derart ausgebildet sind, dass die für den AS-i Bus (3) notwendige Energie aufgeteilt wird.

6. Master (1) für ein Aktor-Sensor-Interface Bussystem nach einem der vorhergehenden Ansprüche, **dadurch gekennzeichnet, dass** der Master (1) die Signalformungskomponente (2) aufweist.

7. Slave (4) für ein Aktor-Sensor-Interface Bussystem nach einem der Ansprüche 1 bis 5, **dadurch gekennzeichnet, dass** der Slave (4) die Energieeinspeisekomponente (6) aufweist.

## Claims

1. Actuator sensor interface bus system, comprising:
- a master (1),
- a power supply unit (7),
- a slave (4) which can be supplied with energy by the power supply unit (7),
- an AS-i bus (3) via which the master (1) can be connected to the slave (4) and which is embodied for transmitting energy and data signals for communication between the master (1) and the slave (4),
- a signal shaping component (2) connected to the AS-i bus (3) and embodied for shaping transmit current pulses into voltage pulses,
**characterised in that**
the slave (4) has an energy feed-in component (6) which is embodied for injecting the energy supplied by the power supply unit (7) onto the AS-i bus (3) and the master (1) has the signal shaping component (2).

2. Actuator sensor interface bus system according to claim 1, wherein the AS-i bus (3) comprises a first and a second line, wherein the signal shaping component (2) is embodied as a two-terminal circuit, each of the terminals of which is connected at the input side to a parallel circuit (10) consisting of a coil and an ohmic resistor, and wherein the two parallel circuits (10) are connected via a capacitor (9).

3. Actuator sensor interface bus system according to one of the preceding claims, wherein the energy feed-in component (6) has an inductor which is embodied for injecting the energy onto the AS-i bus (3).

4. Actuator sensor interface bus system according to claim 3, wherein the inductor is dimensioned such that the energy feed-in component (6) exhibits high impedance with respect to the data signals.

5. Actuator sensor interface bus system according to one of the preceding claims, wherein the actuator sensor interface bus system has a plurality of slaves (4) having the energy feed-in component (6), with the energy feed-in components (6) being embodied in such a way that the energy required for the AS-i bus (3) is distributed.

6. Master (1) for an actuator sensor interface bus system according to one of the preceding claims, **characterised in that** the master (1) has the signal shaping component (2).

7. Slave (4) for an actuator sensor interface bus system according to one of claims 1 to 5, **characterised in that** the slave (4) has the energy feed-in component (6).

## Revendications

1. Système de bus d'interface d'actionneur-capteur comprenant :
- un maître ( 1 ),
- un bloc ( 7 ) d' alimentation,
- un esclave ( 4 ) pouvant être alimenté en énergie par le bloc ( 7 ) d' alimentation,
- un bus ( 3 ) AS-i par lequel le maître ( 1 ) peut être relié à l'esclave ( 4 ) et conçu pour transmettre de l'énergie et des signaux de données pour une communication entre le maître ( 1 ) et l'esclave ( 4 ),
- un composant ( 2 ) de formation de signal, qui est relié au bus ( 3 ) AS-i et qui est conçu pour transformer des impulsions de courant d'émission en des impulsions de tension,
**caractérisé en ce que**
l'esclave comporte un composant ( 6 ) d'injection d'énergie, qui est conçu pour injecter l'énergie fournie par le bloc ( 7 ) d'alimentation dans le bus ( 3 ) AS-i et le maître comporte le composant ( 2 ) de formation du signal.

2. Système de bus d'interface d'actionneur-capteur dans lequel le bus ( 3 ) AS-i comprend un premier et un deuxième conducteurs, le composant ( 2 ) de formation du signal étant constitué en dipôle, dont les bornes sont reliées du côté de l'entrée respectivement à un circuit ( 10 ) en parallèle composé d'une bobine et d'une résistance ohmique, les deux circuits ( 10 ) en parallèle étant reliés par un condensateur ( 9 ) .

3. Système de bus d'interface d'actionneur-capteur suivant l'une des revendications précédentes, dans lequel le composant ( 6 ) d'injection d'énergie comporte une inductance qui est conçue pour injecter l'énergie dans le bus ( 3 ) AS-i.

4. Système de bus d'interface d'actionneur-capteur suivant la revendication 3, dans lequel l'inductance a des dimensions telles que le composant ( 6 ) d'injection d'énergie a une grande impédance pour les signaux de données.

5. Système de bus d'interface d'actionneur-capteur suivant l'une des revendications précédentes, dans lequel le système de bus d'interface d'actionneur-capteur comprend plusieurs esclaves ( 4 ) qui comportent les composants ( 6 ) d'injection d'énergie, les composants ( 6 ) d'injection d'énergie étant tels que l'énergie nécessaire au bus ( 3 ) AS-i est répartie.

6. Maître ( 1 ) pour un système de bus d'interface d'actionneur-capteur suivant l'une des revendications précédentes, **caractérisé en ce que** le maître ( 1 ) comporte le composant ( 2 ) de formation de signal.

7. Esclave ( 4 ) pour un système de bus d'interface d'actionneur-capteur suivant l'une des revendications 1 à 5, **caractérisé en ce que** l'esclave ( 4 ) comporte le composant ( 6 ) d'injection d'énergie.
